# EUROPEAN PATENT SPECIFICATION

(11) **EP 1 601 422 B1**
(45) Date of publication and mention of the grant of the patent: **20.08.2008**
(21) Application number: 04719367.7
(22) Date of filing: 11.03.2004
(51) Int. Cl.: A63B 57/00, E21B 25/00

(54) **APPARATUS FOR DRILLING A HOLE AND METHOD FOR ITS APPLICATION**
GERÄT ZUM BOHREN EINES LOCHS UND ANWENDUNGSVERFAHREN DAFÜR
APPAREIL POUR FORER UN TROU ET SON PROCEDE D'APPLICATION

(30) Priority: 13.03.2003 DK 200300378
(43) Date of publication of application: 07.12.2005
(73) Proprietor: Hansen, Finn Skade, 8800 Viborg (DK)
(72) Inventor: Hansen, Finn Skade, 8800 Viborg (DK)
(74) Representative: Nielsen, Leif
(86) International application number: PCT/DK2004/000153
(87) International publication number: WO 2004/080545

(56) References cited:
- US-A- 4 947 938
- US-A- 4 958 688
- US-A- 5 337 831

## Description

### Field of the Invention

The present invention concerns an apparatus for drilling a hole, preferably in a golf green and of the kind mentioned in the introduction to claim 1.

The invention furthermore concerns a method for drilling a hole and possibly replacing a drilled plug of earth by means of an apparatus according to the invention.

### Background of the Invention

In the golf sport, it is important that the golf courses are in the best possible condition in order that the golf players get the best possible conditions. Therefore, the greenkeepers are maintaining the golf course in the best possible condition, i.e. the fairway is mowed, the semirough is tended, and greens get special treatment.

In order to make the golf play more interesting and varying, the holes are moved on the green several times a week on a normal golf course, whereas the holes on greens for a tournament may be moved every day. This entails doing a time-consuming work, e.g. on an 18-hole golf course, of moving 18 holes every morning so that the golf course is ready for the golf players of the day.

The work with moving the holes has to be done carefully as the existing holes are to be filled with plugs of earth from a new, drilled hole, so that the green of the golf course still has a uniform surface. This means that plugs of earth, which are drilled out, are to have the same length as an existing hole, whereby it is avoided applying soil at the bottom of the hole, or that the new earth plug having to be cut off in length.

For drilling a hole in a green and possibly replacing it in an existing hole, different equipment has been developed which can be used for this work. Common to all these is that they have a circular cutter head which is placed right over the place where the hole is to be drilled. The cutter head rotates and is pressed down into the earth so that an earth plug is received in the cutter head. Subsequently, this earth plug is moved over into an existing hole.

An example is a manual earth drill disclosed in US 5,662,279, and which in principle consists of a circular cutter head on which is provided a shaft with a transverse handle so that by means of the handle one may rotate the cutter head down into the earth.

The drawback of these manual cutter apparatuses is that a certain force is required to drill a hole. This may be difficult in periods where the earth is very dry, entailing some time to be used in drilling new holes in a green of a golf course, and it may be very tedious to move the holes on an 18-hole golf course.

Furthermore, due the work conditions it may be very difficult to drill holes of sufficient quality, since by a manual drill there is a tendency that the greenkeeper will wriggle the cutter head of the drill to and fro instead of the cutter head being moved in a vertical up and down movement. By wriggling the drill, the hole may become oval and/or there be formed a volcanic build-up around the hole.

In order to solve this problem, apparatuses have been developed for being mounted behind a vehicle so that the apparatus is driven by means of e.g. hydraulics. The vehicle is driven to the green and placed where a new hole is wanted, and the cutter head of the apparatus drills a new hole, after which the earth plug is taken out and placed in an existing hole.

The problem with these apparatuses is that the greens are very tender, and that these are the places on the golf course where the players and the greenkeeper wants the best possible care so that the ground becomes the best possible for a golf ball to roll on. Therefore, heavy machines are to be kept away from the green as much as possible so that "tractosis" does not occur, a term describing how the earth is compressed due to tire pressure from e.g. a vehicle, whereby the growth conditions for the grass of the green is substantially impaired, and the quality of the green is depreciated. Particularly in the spring and fall seasons, where the earth is very soft, it may be very difficult to avoid that the tires are making marks on the green.

Therefore, it is only possible to use a vehicle with an apparatus mounted thereon for drilling holes on the spots where the earth has sufficient hardness, or in periods of time where the earth is very dry. However, since golf eventually almost has become an allyear sport, it will be impossible to use such an apparatus all the year round, and another apparatus has to be put into use.

In the American patent publication US 4,958,688 there is described an apparatus solving the above mentioned problems. This apparatus has a size and a weight so that it can be carried around on the golf course or be taken aboard a vehicle which is then parked at the side of the green, followed by the greenkeeper taking the apparatus along and walking into the green. The described apparatus is equipped with a motor which is connected with the cutter head via a shaft, where shaft, motor and cutter head are integrated in control means.

The disadvantage of this type of apparatus is that it is difficult to drill a vertical hole in the green, and that the cutter head is rotating in the same direction all the time. When the cutter head has a unidirectional rotation, it may be difficult to drill a hole of the right diameter and depth, since the greenkeeper has to hold back the apparatus in order to compensate for the rotary forces.

### Object of the Invention

It is therefore the purpose of the present invention to indicate an apparatus for drilling a hole, preferably in a golf green, which in a secure, simple and rapid way ensures drilling of uniform holes, possibly replacing a drilled-out earth plug in an existing hole. This is achieved by an apparatus as specified in the characterizing part of claim 1.

A further object of the invention is to indicate a method for drilling holes by means of the above apparatus. This is achieved by a method as described in the characterising part of claim 8.

### Description of the Invention

The control means of the apparatus is divided into two parts that are assembled when the apparatus is to be used. The upper part and lower parts of the control means do not weigh much each, and thereby it is very easy to transport the apparatus, either manually or in a vehicle.

In order to ensure that the hole becomes an exact circular hole with sharp edges, the control means of the apparatus is connected to a tread plate at its lower part. By placing the tread plate on the earth and thereby standing on the tread plate, the greenkeeper will counteract the rotary forces arising when the cutter head rotates and is pressed down into the earth.

In order to drill a vertical hole so that the cup is always in vertical position and the flag placed in the cup is standing vertically up from the hole, the lower parts of the control means are angularly adjustably connected with the tread plate. This implies that if the green is only sloping slightly at the spot where the new hole is to be drilled, the angularly adjustable lower parts on tread plate are adjusted so that when the upper parts of the control means of the apparatus are put down over the lower parts, the cutter head will stand vertically.

In order to ensure that the angularly adjustable parts remain in the desired angle during the entire drilling process, they may be provided with a locking arrangement, implying that it is possible to adjust and lock the angularly adjustable parts in an arbitrary angle, depending on the slope of the green.

The tread plate may have different shapes, but must have a size so that it is possible to step on it with both feet, and that it is possible to connect the angularly adjustable lower parts of the control means in an area around an opening in the tread plate.

Since it is important that the tread plate is secured during the entire drilling process so that the hole is drilled exactly, the tread plate is designed with a number of non-skid fields. These fields may be formed by applying e.g. a rubber material or by machining the surface of the tread plate. The non-skid fields imply that it is possible to stand fast on the tread plate in every kind of weather.

This opening in the tread plate corresponds approximately in diameter to the diameter of the cutter head, so that the opening in the tread plate contributes to controlling the cutter head when pressed down into the earth. Alternatively, the lower parts can be connected with the tread plate in an area close to an edge of the tread plate so that instead of an opening in the tread plate, a cutout is provided in the tread plate, whereby this cutout can function as a guide on a part of the outer side of the cutter head when pressing the cutter head down into the earth.

The lower parts of the control means are connected with the tread plate and are provided so that they can extend upwards from the tread plate. The lower parts of the control means can be sections that are either solid or profiled tubes, but more important is the fact that they have a dimension that enable insertion of one end part in the upper part of the lower end part of the control means of profiled tubes.

In order to ensure that the apparatus drills a hole which is vertical, the uppermost retainer plates of the apparatus can be provided with a number of spirit levels, whereby the greenkeeper during the entire drilling can watch if the hole is drilled vertically. Alternatively, the spirit levels can be disposed in connection with the lower parts of the control means and/or on the protecting means around the opening in the tread plate.

In order to achieve cutting effect, the cutter head is connected with a drive device that is arranged to transform the rotation of the drive motor into a reciprocating turning movement of the cutter head. By the cutter head having a reciprocating, turning movement instead of a unidirectional rotation, it is possible to drill holes with more smooth sides. If the cutter head hits pebbles with a reciprocating turning movement, the stones will be moved away from the toothing of the cutter head, whereby the cutter head will not be put out of its course.

A reciprocating movement of the cutter head implies that the earth plug becomes less compressed inside the cutter head in relation to an earth plug cut out with a cutter head with unidirectional rotation. This implies that it is easier to have the earth plug replaced in an existing hole, and at the same time, the grass on the earth plug will have greater possibility of growing again as the roots of the grass are having better conditions in a relatively loose plug of earth. Further problems with an earth plug cut out with a unidirectional rotation may be that a part of the earth plug is torn off and is carried around with the cutter head and may be jammed inside the cutter head.

In order to achieve this reciprocating turning movement of the cutter head, the said drive device connecting the said drive motor and said shaft is a connecting rod arrangement that includes an eccentric drive with a number of holes disposed with dif ferent spacing from the rotary shaft of the drive motor, a connecting rod, and a connecting rod head which is adapted for receiving an end part of the connecting rod.

By using an eccentric drive with a number of holes with different spacing for the rotary shaft of the drive motor, it is possible to determine the amplitude of the reciprocating turning movement of the cutter head so that it becomes possible to adjust the cutting movement of the cutter head in relation to:
- different types of earth, e.g. clay or sand, and/or
- the texture of the earth, e.g. wet or dry earth.

Furthermore, when the cutter head is slowly worn down, it will also be an advantage if the center of rotation of the connecting rod on the eccentric drive possibly can be moved so that the toothing of the cutter head is provided a greater turning movement in order to ensure that the earth plug is cut completely free.

When worn down, the cutter head will typically be sharpened again so that in principle, it is only adjusted in relation to the earth conditions.

Typically, the connecting rod will be connected with the eccentric drive in a certain hole decided by the greenkeeper's knowledge about the types of earth of which the golf course consist, and this setting is only changed a couple of times in the course of a golf season.

By using a connecting rod and a connecting rod head, it is possible to transform the rotation of the drive motor into a reciprocating turning movement of the cutter head. The connecting rod head is shaped with a cutout/groove which is adapted for being received in an end part of the connecting rod, which is a normal concept for a connecting rod/connecting rod head arrangement. In order to transmit the rotation of the drive motor, there is to be space for the connecting rod to go in over parts of the connecting rod head.

An alternative to using a connecting rod arrangement for transforming the rotation of the drive motor into a reciprocating turning movement of the cutter head is that the drive motor is provided with an electronic control unit that may control the direction of rotation of the drive motor. The advantage of electronic control is that a direct transition from drive motor to cutter head can be used.

Since by using a drive device like a connecting rod arrangement a rotating cyclic movement occurs whereby the forces to be absorbed in the control means are produced, retainer plates for the control means are provided on the upper control means around the drive device.

These retainer plates are exchangeable, implying that it is easy to manufacture the apparatus as the control means are assembled with the retainer plates that may be clamped onto to the profiled tube parts of the control means.

In an embodiment of the invention, these retainer plates are designed so that they are divided into several parts that each are provided with apertures fitting to the profile tubes of the control means. The parts of the retainer plate are clamped around the tube sections with e.g. pointed screws or the like, so that the retainer plate is secured and may absorb the rotational forces.

In order to protect the connecting rod arrangement, which is typically disposed between two retainer plates against strikes, impacts, soil and the like, these to retainer plates are provided with a detachable shielding extending around the entire outer edge of the retainer plates. The shielding further ensures that no rotating parts are immediately accessible, and a more safe apparatus is achieved.

Alternatively, the retainer plates are designed with a through-going hole communicating with a groove that runs from an edge of the retainer plate and in to the through-going hole so that the profile tube of the control means is disposed through the hole on the retainer plate and is clamped by a pointed screw or the like being screwed transversely to the groove.

In order to avoid the drawbacks connected to a gas/diesel powered drive engine which is to filled up repeatedly and is polluting, the said drive motor is electrically powered, and the apparatus includes a number of batteries for powering the drive motor, the batteries being mounted on the said upper part of the control means, and that in connection with the said handle an activation button for activating the drive motor is provided.

Furthermore, an electrically powered drive motor is also advantageous in that the greenkeeper can use the apparatus without hearing protector and may walk undisturbed out on the golf course and drill the holes, without disturbing the golf players while e.g. golf is played on an adjacent hole.

In an embodiment of the invention, the drive motor is electrically driven, and in order to avoid drawing cables, which is almost impossible on a golf course, to the remotest greens, a number of batteries are fitted on the apparatus. These batteries are connected with an activating button on the handles so that by holding the handles one may easily access the activation button so that the drive motor is started.

The batteries may either be of the kind which can be recharged so that the greenkeeper, when he or she has been around drilling new holes on the 18 hole course, may take the batteries home to the workshop and e.g. set them for recharging so that the apparatus is ready for use the next time, or the batteries can be of the kind which are used once and then replaced.

In order to protect the greenkeeper when drilling a hole, the tread plate at one side of the said opening is provided with a protecting means. This protecting means is to prevent the greenkeeper from getting his feet into close contact with the rotating cutter head, so that injuries are avoided.

The protecting means may be a bracket shaped with the same profile as the lower parts of the control means, or be a guard edge mounted on the tread plate, so that it is impossible to get the feet in over the hole. When drilling holes in wet and bad weather, such a guard edge may furthermore protect the greenkeeper's footwear/clothing against splashes of mud and water.

Alternatively, the protecting means can be a plate arrangement that e.g. includes two curving plates separated by a number of spacers, where the separate sides of the plates guard the greenkeeper from the opening in the tread plate.

A further alternative may be a molded protecting means.

Apart from protecting, the sturdy construction with plates contributes to reinforcing the lower parts of the control means so that it is possible to absorb the rotary forces from drilling a hole.

After the hole has been drilled, there will be an earth plug in the cutter head which either is to be discarded or to be replaced in an existing hole. In order to effect this, the means for releasing the said earth plug is a plate provided inside the cutter head, and which is connected with an articulated bending arm with an upper activation part which is pivotably connected with the apparatus.

The plate disposed inside the cutter head will, when the apparatus is not in use, be disposed in an inactive position close to the lower part of the cutter head. This entails that the plate is laid upon the surface of the earth and is slowly pushed up through the cutter head when the hole is drilled.

In order to drive out the earth plug, the plate is connected with an articulated bending arm on which the uppermost joint is pivotably connected with an upper part of the apparatus. This implies that the when the plate is pushed up through the cutter head, the bending arm will be pushed up through the through-going holes of the control means of the apparatus or apertures in the retainer plates. Since the uppermost joint of the bending arm is secured to the apparatus, the upwards acting force transmitted from the plate to the bending arm will entail that the bending arm deflects, and that the upper activation part will swing around. In order to release the upper activation part so that the earth plug is pressed down into an existing hole, the greenkeeper pulls the upper activation part so that the bending arm is acted on by a downwards directed force that presses the plate down through the cutter head.

The cutter head is designed so that upwards it is fastened to a shaft on which there is a fastening arrangement on which the upper, tubular part of the cutter head can be mounted. The mounting of the cutter head can be effected with e.g. screws, bolts or the like. This fastening arrangement does not cover the entire tubular earth opening in the cutter head, implying that the operator can see down on the plate or on a part of the earth plug.

The possibility of seeing the earth plug is e.g. used to place the earth plug in the correct position when placed in an existing hole, so that e.g. the direction of the grass is approximately the same for the earth plug as for the surrounding green.

In order to determine/adjust the depth of the drilled hole, stop means have been provided on the lower parts of the control means, e.g. a split pin, bushings and/or pipe sockets.

The functions of these stop means are to prevent the upper parts of the control means of the apparatus from sliding too far down over the lower part of the control means so that the hole does not become too deep.

Such a stop means may e.g. be a split pin where in the lower parts of the control means there are disposed a number of holes in which the split pin is placed. However, this implies that it is only possible to drill holes of a predetermined depth.

Alternatively, the stop means can be bushings, which are clamped around the lower parts of the control means with screws or the like, or pipe sockets having a length corresponding to the lower parts of the control means minus the length corresponding to the desired depth of the hole. These pipe sockets are made of a pipe section which is placed down around the lower parts. These pipe sections will be of the same dimension as the profiled tubes of the upper parts of the control means in order to ensure sufficient bearing surface between the pipe sockets and the profile tubes.

An alternative to mount stop means on the lower parts of the control means is to provide a stop means on the said articulated bending arm, which could be a bracket preventing the deflection of the bending arm, whereby the bending arm cannot be pressed farther up the plate than the bracket allows for the deflection of the bending arm.

Alternatively, the stop means on the articulated bending arm can be a bushing, split pin or pipe socket disposed on the lower part of the bending arm inside the cutter head. This, however, implies that it is necessary to dismount the cutter head every time the depth of the holes is to be adjusted.

As alternative to the stop means being provided in connection with the lower parts of the control means, the stop means can be provided in connection with the lowermost of the retainer plates. Such a stop means can be a bolt/screw which is screwed up into a thread in the lowermost of the retainer plates. The length of the part of the stop means located below the lowermost retainer plate determines how far down the cutter head can come, since a lower part of the stop means will bear against either the upper side of the protecting means or the tread plate when the upper parts of the control means are passed down over the lower part of the control means.

If the greenkeeper, instead of using a vehicle for transporting himself and the apparatus to drilling out holes on the golf course, chooses to walk around, the said tread plate is provided with a number of wheels or rollers, implying it will be possible to transport the apparatus by tipping the tread plate and then push or pull the entire apparatus further on to the next hole. The wheels or rollers with which the apparatus is provided are to be a broad as possible, or of a nature providing that the deadweight of the apparatus is not making marks in the green.

In order to use an apparatus for drilling a hole, the drilling of the hole is to be performed by means of the following steps:
- the tread plate with the angularly adjustable lower parts of the control means are placed on the position where the hole is to be drilled;
- the upper part of the control means of the apparatus is connected to the lower parts of the control means, and the apparatus is adjusted so that the cutter head is disposed vertically, as the operator places one or both feet on the tread plate;
- the drive motor is activated, and the reciprocating cutter movement of the cutter head is started;
- by means of the handle, the operator presses the cutter head down into the earth until a desired depth has been reached, and the drive motor is stopped;
- the upper part of the control means is lifted free from the lower parts so that the cutter head containing the drilled plug of earth is lifted off the ground.

When the greenkeeper comes to the golf green and has decided where the new hole is to be placed, the tread plate with the lower parts of the angularly adjustable control means is positioned so that it is possible to allow for the inclination of the green and thereby to achieve that the cutter head stands vertically when the drilling is commenced.

The two parts of the control means are assembled, and the apparatus is adjusted, e.g. with fitted spirit levels, so that the cutter head is positioned vertically.

In order to ensure that the apparatus is maintained in the desired position and to reduce the rotary actions from the apparatus during drilling, the greenkeeper places one or both feet on the tread plate so that he holds the tread plate in the desired position by his own weight, whereby the lower part of the control means is held fast.

By using a tread plate it is furthermore prevented that compressing of the surrounding areas of the hole occurs while drilling holes. Compression may contribute to destroy the area and make it uneven so that it is difficult to perform putting along the ground with a golf ball. The large surface area of the tread plate provides the pressure from greenkeeper and apparatus to be distributed evenly on a larger area, whereby the area is spared against unwanted indentations and treading marks.

In an embodiment of the invention, an adjustable spacer arrangement is provided in connection with the lowermost retainer plate and preferably opposite the drive motor, including an adjustable screw/bolt device which at a free end part is designed with a pressing plate.

The depth of the hole is now determined by the upper part of the control means with the cutter head being pressed downwards, until the pressing plate of the screw/bolt device of the spacer arrangement bears against the tread plate/protecting means.

By adjusting the screw device, it is possible to determine the desired depth of the holes and to compensate for wear on the cutter head.

When the cutter head has reached the desired depth, it is important that the control means can be disassembled so that the greenkeeper does not have to lift the entire apparatus. The greenkeeper stands on the tread plate for holding back the lower parts of the control means to enable the upper part of the control means to be lifted off the lower parts. It is important that the upper part of the control means is lifted vertically up, since a to-and-fro movement with the apparatus for getting the cutter head containing the earth plug up from the earth causes the hole to be either oval or formation of a volcanic build-up around the hole, and thereby it is difficult to fit a putting cup down into the hole.

If this earth plug, which has just been drilled from a hole, is to be replaced in an existing hole, the above method is added the following further steps:
- the upper part of the control means is disposed opposite to the existing hole so that at least the lower part of the cutter head is down into the existing hole;
- by means of the articulated bending arm, the said plate disposed inside the cutter head is activated for driving the earth plug down into the existing hole;
- the upper parts of the control means are removed, and the surface of the earth plug is fine-adjusted with the surrounding green.

When the upper part of the control means have been lifted off, the cutter head is placed down into the existing hole. It may be an advantage that a part of the cutter head is placed down into the hole so that the earth plug is led directly down into the hole, instead of there being a risk that the lowermost parts of the earth plug hit the edge of the hole.

In order to get the earth plug placed in the hole, the upper activation part of the bending arm is actuated by the greenkeeper pulling the activation part. In a preferred embodiment, it will be so that the greenkeeper pulls the uppermost activation part of the bending arm with a movement towards himself.

When the earth plug has been placed, the upper part of the apparatus is lifted away, and the greenkeeper finishes the area around the replaced earth plug with e.g. a little sand which advances the growing together of the grass on the earth plug and the surrounding green, so that there are no signs of a golf hole having been on that spot.

The reason for the importance of the earth plug to fit exactly down into an existing hole is firstly that the green of the golf course will not sink on certain places where holes have been previously, and that the grass growing there will much easier take roots again if there are no air holes under or beside the earth plug.

In case the apparatus is used in very moist earth, it may occur that the earth plugs, when removed, are forming a vacuum so that it becomes very difficult to lift the upper part of the control means free from the lower parts, since the vacuum in the earth will suck back the earth plug. Therefore, for releasing the earth plug from cutter head, a special airing and/or ejecting arrangement can be used, which possibly may consist of an external hand tool.

An airing arrangement may have one or more jabbing members that may be pressed down into the earth plug so that access of air to the underside of the earth plug is created, whereby the vacuum effect is considerably reduced, and it will be possible to pull the cutter head up from the earth. In an embodiment of the invention, the jabbing member is a spear which e.g. can be fitted on the apparatus so that it is ready at the hand of the greenkeeper all the time.

Alternative to a such special airing arrangement, which is mounted directly on the apparatus, may be that an external hand tool is used, as e.g. a broken golf club that can be stuck down through the upper opening of the cutter head and past the plate placed inside the cutter head and thereby form access of air to the underside of the earth plug.

In the above, the apparatus is described for drilling holes in a green on a golf course, but the invention may furthermore find application in other areas where drilling of holes at a certain depth is desired. This may e.g. be by placing fence posts, placing foundation piles, planting trees and/or placing poles for e.g. mailboxes and the like.

Alternative to a cutter head with toothing can be a cutter head with straight edge entailing a straight cutout at the bottom of the earth hole.

### Short Description of the Figures

The invention is explained in more detail in the following with reference to the Figures, where:
Fig. 1 shows the parts of an apparatus according to the invention;
Fig. 2 shows a perspective view of the apparatus;
Fig. 3 shows a perspective view of the apparatus;
Fig. 4 shows a perspective view of the tread plate according to the invention; and
Fig. 5 shows a perspective view of the connecting rod arrangement according to the invention.

### Detailed Description of the Invention

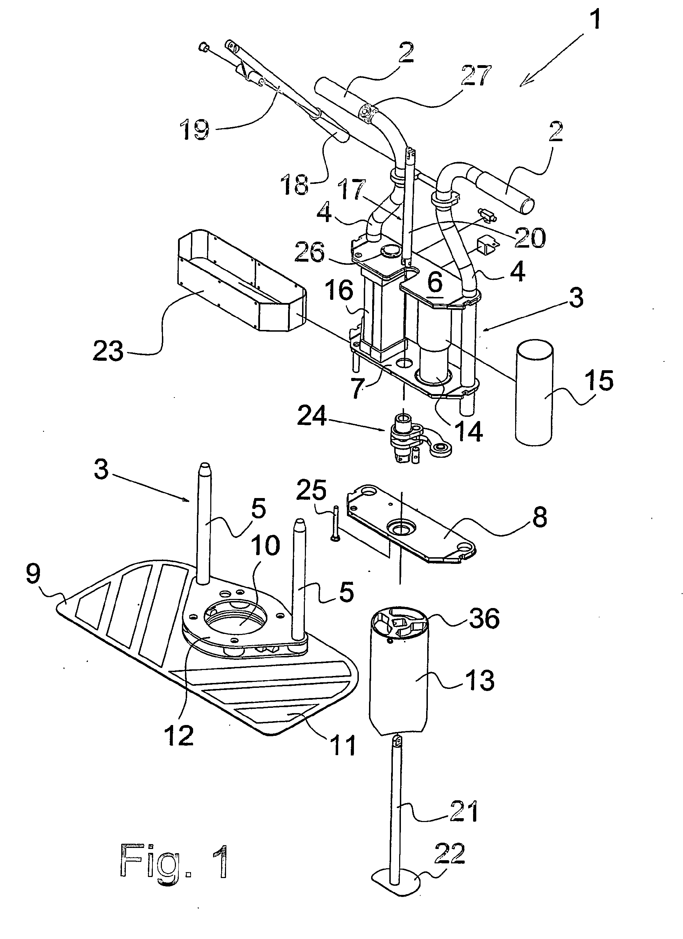

On Fig. 1 is shown an apparatus 1 which includes:
- handle 2,
- control means 3 including upper parts 4 and lower parts 5,
- retainer plates 6, 7, 8,
- a tread plate 9 including an opening 10 and anti-skid fields 11,
- a protecting means 12
- a cutter head 13 with a holder arrangement 36,
- a drive motor 14 with guard 15,
- a battery element 16,
- an articulated bending arm 17 including a handle 18, an upper activation part 19, a central part 20, a lower part 21 and a plate 22,
- a guard 23,
- a connecting rod arrangement 24,
- a stop means 25,
- a spirit level 26, and
- an activating button 27.

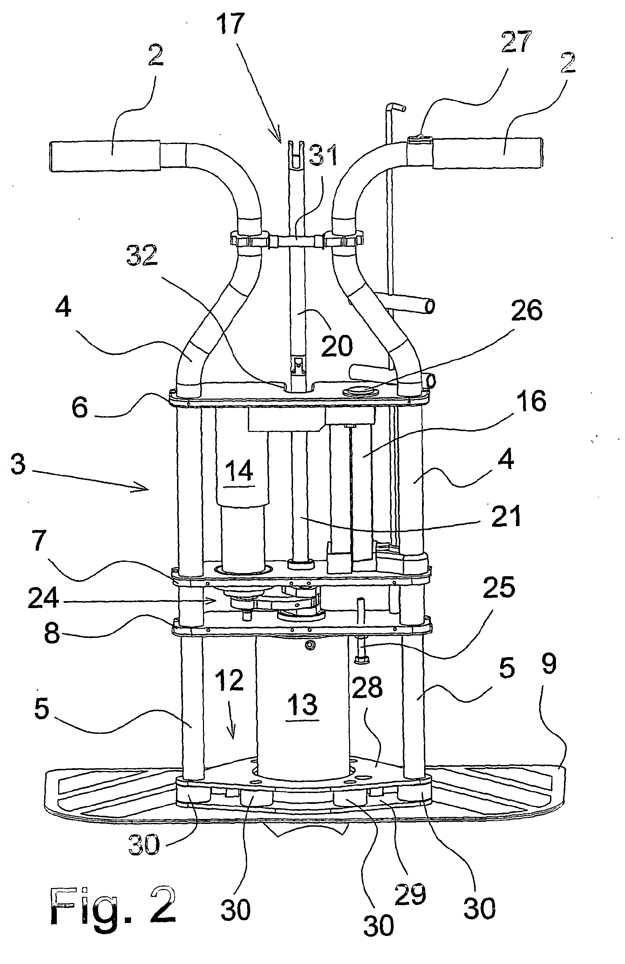

Fig. 2 shows the apparatus 1 where the upper parts 4 of the control means 3 are connected to the handles 2 and held together with the retainer plates 6, 7, 8 that are disposed along the upper parts 4 of the control means 3.

The lower parts 5 of the control means 3 are shown disposed in the upper parts 4 of the control means 3 and are connected downwards angularly adjustable to a tread plate 9.

The tread plate 9 is provided with a protecting means 12 which is a plate construction including two plates 28, 29 separated by spacer elements 30. On both plates 28, 29 are provided apertures allowing the cutter head 13 to pass through.

On the retainer plate 6 is provided a spirit level 26 so that the greenkeeper can see whether the hole is drilled vertically, irrespectively of the slope of the green.

Between the uppermost retainer plate 6 and the central retainer plate 7, the drive motor 14 and a replaceable battery element 16 are disposed, which are interconnected electrically, and where the drive motor 14 can be activated by means of an activation button 27 which is disposed in immediate vicinity of one handle 2, so that by holding the handle 2 it is possible to reach the activation button 27 by e.g. a thumb.

Between the central retainer plate 7 and the lowermost retainer plate 8, the connecting rod arrangement 24 is disposed, connecting the drive motor 14 with the cutter head 13 and providing for transforming the rotation of the drive motor 14 into a reciprocating turning movement of the cutter head 13.

In connection with the lowermost retainer plate 8 there is provided a stop means 25 in the shape of an adjustable screw/bolt device. By adjusting the screw/bolt device 25, it is possible to determine the desired depth of the holes and to compensate for wear of the cutter head 13, since the screw/bolt device 25 will bear against the upper side of plate 29 when the upper parts 4 of the control means 3 are brought down over the lower parts 5 of the control means 3 and thereby stop the drilling down of the cutter head 13.

The upper actuation part (not shown) of the articulated bending arm 17 is pivotably connected with the upper parts 4 of the control means 3 around a reinforcement 31 and connected with the central part 20, which in turn is connected with the lowermost part 21 which is passed down through an aperture 32 in the retainer plate 6, an opening (not shown) in the retainer plate 7, the connecting rod arrangement 24 and down internally of the cutter head 13.

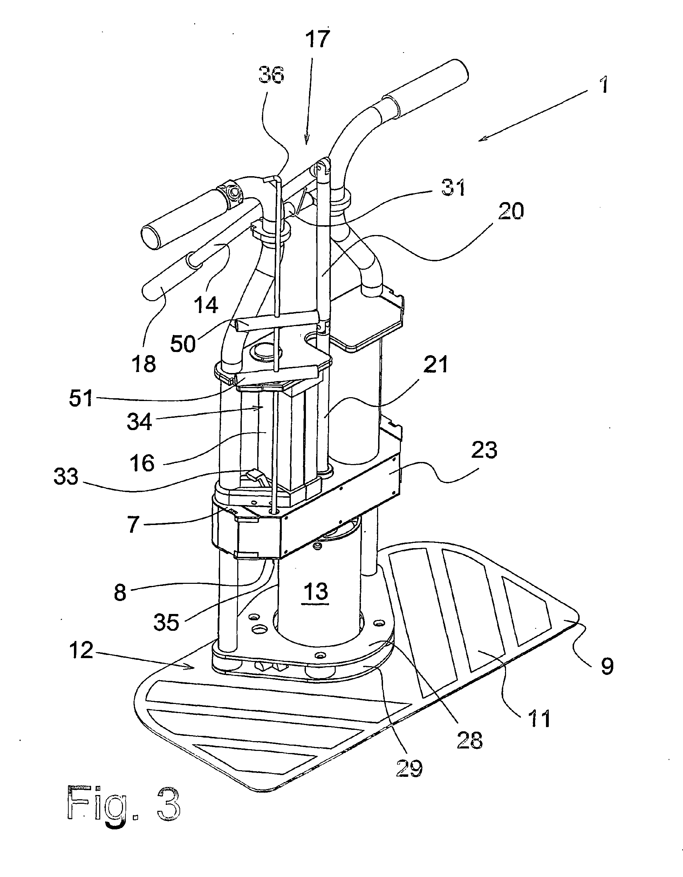

On Fig. 3 is shown how the upper activation part 19 of the articulated bending arm 17 is connected to the central part 20. This implies that when the plate (not shown) internally of the cutter 13 is pressed upwards, the joint of the bending arm 17 will deflect. In the shown embodiment, the central part 20 of the bending arm 17 will deflect inwards against the greenkeeper (not shown), while the upper activation part 19, due to its pivoting connection around the reinforcement 31, will turn away from the greenkeeper (not shown). In order to eject the earth plug (not shown) from the cutter head 13, the handle 18 on the upper activation part 19 is pulled, whereby is obtained a downwards force on the plate (not shown) inside the cutter head 13.

In order to protect the connecting rod arrangement (not shown), the guard 23 is provided between the retainer plate 7 and the retainer plate 8, so that it extends around along the edge of the retainer plates 7, 8 and thereby closes off the connecting rod arrangement (not shown). The guard 23 is preferably detachable so that it is possible to repair/adjust the connecting rod arrangement (not shown).

In connection with the battery element 16, a locking device 33 is provided which can be loosened/tightened, whereby it becomes possible to replace the battery element 16 or to fasten the battery element 16 to the apparatus 1.

Protecting means 12, which is a plate construction including two plates 28, 29, will protect the feet (not shown) of the greenkeeper against the cutter head 13, when the feet are placed on the tread plate 9 which is provided with anti-skid fields 11.

The apparatus 1 is provided with a jabbing element 34 for airing earth plugs (not shown) which is fastened to the apparatus 1, when the jabbing element 34 is not in use, through holes in the retainer plates 6, 7, 8.

The jabbing element 34 is shown in a form where one end is a pointed end 35 for pushing down earth plugs, and a second end a hook 36 for accommodating a cup in a golf hole for placing an earth plug. The jabbing element 34 has two handles 50, 51, where the handle 50 is used when applying the pointed end 35 and the handle 51 is used when applying hook 36.

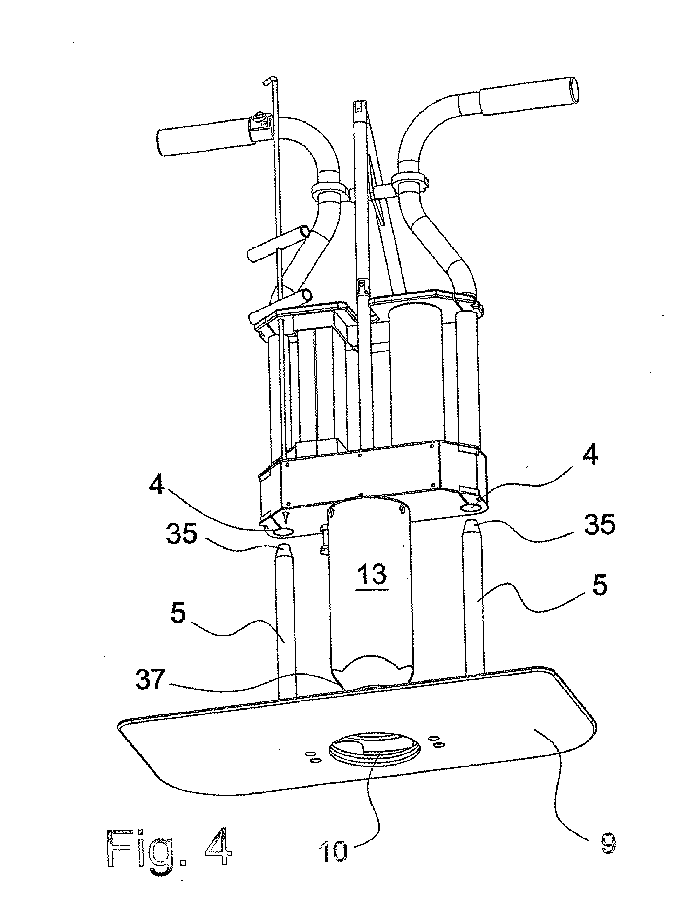

Fig. 4 shows the lower parts 5 of the control means 3 which are terminated with a pointed end part 35, implying it being easy to place the upper parts 4 of the control means 3 down over the lower parts 5.

The lower part of the cutter head 13 has a lower toothing 37 making it easier to cut down through the earth when it is passed through the opening 10 in the tread plate 9. The opening 10 is slightly larger in diameter than the diameter of the cutter head 13.

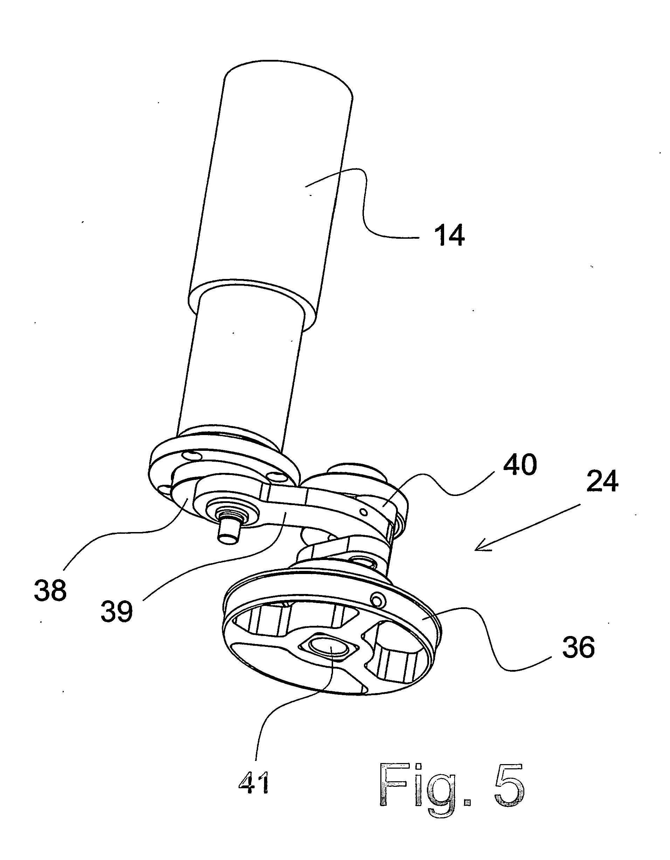

On Fig 5 is shown the connecting rod arrangement 24 which includes an eccentric drive 38 that is connected with one of the connecting rod 39, where this connecting rod 39 in the other end is connected to a connecting rod head 40.

In the connecting rod head 40 is designed a groove so that the connecting rod 39 can be accommodated in the connecting rod head 40 when the rotation from the drive motor 14 is to be transformed by means of the connecting rod arrangement 24 into a reciprocating movement of the cutter head (not shown).

In order to connect the connecting rod arrangement 24 with the cutter head (not shown), there is provided a holder arrangement 36 connected to the connecting rod head 40 via a shaft 41. It is possible to mount the cutter had (not shown) on the shaft 41 by means of screws or rivets.

The eccentric drive 38 is provided with the holes (not shown) that each have a different spacing to the rotary shaft (not shown) of the drive motor 14. The connecting rod 39 may thereby be mounted in different holes (not shown) so that the rotation from the drive motor 14 can be transformed into different reciprocating turning movements of the cutter head (not shown).

## Claims

1. An apparatus (1) for drilling a hole, preferably in a golf green, including a handle (2), a circular, tubular cutter head (13) with a lower toothing (37), a drive motor (14), control means (3) for the cutter head (13) and means for driving out an earth plug from the cutter head (13), where the drive motor (14) and the handle (2) are integrated with an upper part (4) of the control means (3), where the drive motor (14) is connected with the cutter head (13) via a shaft (41) which has been mounted in a number of bearings in retainer plates (7, 8) for the control means (3), the apparatus (1) possibly being adapted for replacing a drilled out plug of earth, **characterized in that** the said control means include a number of lower parts (5) that are angularly adjustably connected with a tread plate (9) which opposite to the cutter head (13) includes an opening (10), the lower parts (5) of the control means (3) extending upwards from the tread plate (9) for interacting with the said upper parts (4) of the control means (3), that the cutter head (13) is connected with a drive device (24) adapted to convert the rotation of the drive motor (14) into a reciprocating turning movement of the cutter head (13).

2. Apparatus according to claim 1, **characterized in that** the said drive device (24) connecting the said drive motor (14) and said shaft (41) is a connecting rod arrangement (24) that includes an eccentric drive (38) with a number of holes (32) disposed with different spacing from the rotary shaft of the drive motor (14), a connecting rod (39), and a connecting rod head (40) which is adapted for receiving an end part of the connecting rod (39).

3. Apparatus according to claims 1 - 2, **characterized in that** the said drive motor (14) is electric powered and that the apparatus (1) includes a number of batteries (16) for operating the drive motor (14), the batteries (16) being mounted on the said upper part (4) of the control means, and that in connection with the said handle (2) there is an activation button (27) for activating the drive motor (14).

4. Apparatus according to claims 1 - 3, **characterized in that** the tread plate (9) is provided with a protecting means (12) at one side of the said opening (10).

5. Apparatus according to claims 1 - 4, **characterized in that** the means for releasing the said earth plug is a plate (22) which is provided inside the cutter head (13), and which is connected with an articulated bending arm (17) with an upper activating part (19) which is pivotably connected with the apparatus (1).

6. Apparatus according to claim 1 - 5, **characterized in that** stop members (25) are provided on the lower parts (5) of the said control means (3), e.g. a split pin, bushings and/or pipe sockets.

7. Apparatus according to claim 1 - 6, **characterized in that** the said tread plate (9) is provided with a number of wheels or rollers.

8. A method for drilling holes by means of an apparatus (1) according to the any of the claims 1 - 7, **characterized in that** drilling of a hole is performed by means of the following steps:
- The tread plate (9) with the angularly adjustable lower parts (5) of the control means are placed on the position where the hole is to be drilled;
- the upper parts (4) of the control means (3) of the apparatus (1) are connected to the lower parts (5) of the control means, and the apparatus (1) is adjusted so that the cutter head (13) is disposed vertically, as the operator places one or both feet on the tread plate (9);
- the drive motor (14) is activated, and the reciprocating cutter movement of the cutter head (13) is started;
- by means of the handle (2), the operator presses the cutter head (13) down into the earth until a desired depth has been reached, and the drive motor (14) is stopped;
- the upper parts (4) of the control means (3) are lifted free from the lower parts (5) so that the cutter head (13) containing the drilled plug of earth is lifted off the ground.

9. Method according to claim 8, **characterized by** the following additional steps:
- the upper parts (4) of the control means (3) are disposed opposite to the existing hole so that at least the lower part of the cutter head (13) is down into the existing hole;
- by means of the articulated bending arm (17), the said plate (22) disposed inside the cutter head (13) is activated for driving the earth plug down into the existing hole;
- the upper parts (5) of the control means (3) are removed and the surface of the earth plug is fine-adjusted with the surrounding green.

10. Method according to claims 8 - 9, **characterized in that** for releasing earth plug from the cutter head (13), a special airing and/or ejecting arrangement, which possibly can consist of an external manual tool, is used.

## Patentansprüche

1. Vorrichtung (1) zum Bohren eines Lochs vorzugsweise auf einem Golfplatz, die einen Griff (2), einen kreisförmigen, rohrförmigen Schneidkopf (13) mit einer unteren Zahnung (32), einen Antriebsmotor (14), Steuermittel (3) für den Schneidkopf (13) und Mittel zum Austreiben eines Erdpfropfens aus dem Schneidkopf (13) umfasst, wobei der Antriebsmotor (14) und der Griff (2) in einen oberen Teil (4) der Steuermittel (3) integriert sind, wobei der Antriebsmotor (14) mit dem Schneidkopf (13) über eine Welle (41) verbunden ist, die in zahlreichen Lagern in Halteplatten (7, 8) für die Steuermittel (3) montiert worden ist, wobei die Vorrichtung (1) möglicherweise dazu ausgelegt ist, einen ausgebohrten Erdpfropfen zu ersetzen, **dadurch gekennzeichnet, dass** die Steuermittel zahlreiche untere Teile (5) enthalten, die in Winkelrichtung einstellbar mit einer Trittplatte (9) verbunden sind, die gegenüber dem Schneidkopf (13) eine Öffnung (10) aufweist, wobei sich die unteren Teile (5) der Steuermittel (3) von der Trittplatte (9) nach oben erstrecken, damit sie mit den oberen Teilen (4) der Steuermittel (3) in Wechselwirkung stehen, und dass der Schneidkopf (13) mit einer Antriebsvorrichtung (24) verbunden ist, die dazu ausgelegt ist, die Drehung des Antriebsmotors (14) in eine hin und her gehende Drehbewegung des Schneidkopfs (13) umzuwandeln.

2. Vorrichtung nach Anspruch 1, **dadurch gekennzeichnet, dass** die Antriebsvorrichtung (24), die den Antriebsmotor (14) mit der Welle (41) verbindet, eine Verbindungsstangenanordnung (24) ist, die einen exzentrischen Antrieb (38) mit einer Anzahl von Löchern (32), die in unterschiedlichem Abstand von der Drehwelle des Antriebsmotors (14) angeordnet sind, eine Verbindungsstange (39) und einen Verbindungsstangenkopf (40), der dazu ausgelegt ist, einen Endabschnitt der Verbindungsstange (39) aufzunehmen, umfasst.

3. Vorrichtung nach Anspruch 1-2, **dadurch gekennzeichnet, dass** der Antriebsmotor (14) mit elektrischem Strom gespeist wird und dass die Vorrichtung (1) zahlreiche Batterien (16) zum Betreiben des Antriebsmotors (14) enthält, wobei die Batterien (16) an dem oberen Abschnitt (4) der Steuermittel angebracht sind, und dass in Verbindung mit dem Griff (2) ein Betätigungsknopf (27) zum Betätigen des Antriebsmotors (14) vorhanden ist.

4. Vorrichtung nach den Ansprüchen 1-3, **dadurch gekennzeichnet, dass** die Trittplatte (9) mit einem Schutzmittel (12) auf einer Seite der Öffnung (10) versehen ist.

5. Vorrichtung nach den Ansprüchen 1-4, **dadurch gekennzeichnet, dass** die Mittel zum Freigeben des Erdpfropfens durch eine Platte (22) gebildet sind, die innerhalb des Schneidkopfes (13) vorgesehen ist und mit einem gelenkig abwinkelbaren Arm (17) verbunden ist, der einen oberen Aktivierungsabschnitt (19) besitzt, der mit der Vorrichtung (1) schwenkbar verbunden ist.

6. Vorrichtung nach den Ansprüchen 1-5, **dadurch gekennzeichnet, dass** an den unteren Abschnitten (5) der Steuermittel (3) Anschlagelemente (25), z. B. ein Splint, Buchsen und/oder Rohrstutzen, vorgesehen sind.

7. Vorrichtung nach den Ansprüchen 1-6, **dadurch gekennzeichnet, dass** die Trittplatte (9) mit zahlreichen Rädern oder Rollen versehen ist.

8. Verfahren zum Bohren von Löchern mittels einer Vorrichtung (1) nach einem der Ansprüche 1-7, **dadurch gekennzeichnet, dass** das Bohren eines Lochs mittels der folgenden Schritte ausgeführt wird:
- Anordnen der Trittplatte (9) mit den in Winkelrichtung einstellbaren unteren Abschnitten (5) der Steuermittel an der Position, an der das Loch gebohrt werden soll;
- Verbinden der oberen Abschnitte (4) der Steuermittel (3) der Vorrichtung (1) mit den unteren Abschnitten (5) der Steuermittel und Einstellen der Vorrichtung (1), so dass der Schneidkopf (13) vertikal angeordnet ist, wenn die Bedienungsperson einen Fuß oder beide Füße auf die Trittplatte (9) stellt;
- Aktivieren des Antriebsmotors (14) und Beginnen der hin und her gehenden Schneidbewegung des Schneidkopfes (13);
- Drücken des Schneidkopfes (13) nach unten in die Erde durch die Bedienungsperson mittels des Griffs (2), bis eine gewünschte Tiefe erreicht worden ist, und Anhalten des Antriebsmotors (14);
- Anheben der oberen Abschnitte (4) der Steuermittel (3), bis sie von den unteren Teilen (5) freigegeben sind, so dass der Schneidkopf (13), der den ausgebohrten Erdpfropfen enthält, vom Boden abgehoben wird.

9. Verfahren nach Anspruch 8, **gekennzeichnet durch** die folgenden zusätzlichen Schritte:
- Anordnen der oberen Abschnitte (4) der Steuermittel gegenüber dem vorhandenen Loch, so dass zumindest der untere Abschnitt des Schneidkopfes (13) in das vorhandene Loch nach unten bewegt wird;
- Aktivieren der in dem Schneidkopf (13) angeordneten Platte (22) mittels des gelenkig anwinkelbaren Arms (17), um den Erdpfropfen nach unten in das vorhandene Loch zu treiben;
- Entfernen der oberen Abschnitte (5) der Steuermittel (3) und Feinanpassen des Erdpfropfens an den umgebenden Rasen.

10. Verfahren nach den Ansprüchen 8-9, **dadurch gekenntzeichnet, dass** zum Freigeben des Erdpfropfens aus dem Schneidkopf (13) eine spezielle Entlüftungs- und/oder Ausstoßanordnung verwendet wird, die möglicherweise aus einem externen Handwerkzeug bestehen kann.

## Revendications

1. Appareil (1) pour forer un trou, de préférence sur le green d'un terrain de golf, comprenant une poignée (2), une tête de coupe tubulaire circulaire (13) avec une denture inférieure (37), un moteur d'entraînement (14), un moyen de commande (3) pour la tête de coupe (13) et un moyen pour faire sortir une carotte de terre de la tête de coupe (13), le moteur d'entraînement (14) et la poignée (2) étant intégrés avec une partie supérieure (4) du moyen de commande (3), le moteur d'entraînement (14) étant connecté à la tête de coupe (13) via un arbre (41) ayant été monté dans un certain nombre de paliers dans des plaques de retenue (7, 8) pour le moyen de commande (3), l'appareil (1) pouvant être adapté pour remettre en place une carotte de terre extraite, **caractérisé en ce que** ledit moyen de commande comprend un certain nombre de parties inférieures (5) reliées de manière angulairement ajustable à une plaque de marche (9) qui comprend une ouverture (10) en opposition à la tête de coupe (13), les parties inférieures (5) du moyen de commande (3) s'étendant vers le haut à partir de la plaque de marche (9) pour l'interaction avec lesdites parties supérieures (4) du moyen de commande (3), **en ce que** la tête de coupe (13) est reliée à un dispositif d'entraînement (24) adapté pour convertir la rotation du moteur d'entraînement (14) en un mouvement tournant de va et vient de la tête de coupe (13).

2. Appareil selon la revendication 1, **caractérisé en ce que** ledit dispositif d'entraînement (24) reliant ledit moteur d'entraînement (14) et ledit arbre (41) est un dispositif de bielle (24) incluant un entraînement excentrique (38) avec un certain nombre de trous (32) disposés selon différents espacements par rapport à l'arbre rotatif du moteur d'entraînement (14), une bielle (39), et une tête de bielle (40) adaptée pour recevoir une partie d'extrémité de la bielle (39).

3. Appareil selon l'une des revendications 1 ou 2, **caractérisé en ce que** ledit moteur d'entraînement (14) est alimenté électriquement, et **en ce que** l'appareil (1) comprend un certain nombre de batteries (16) pour faire fonctionner le moteur d'entraînement (14), les batteries (16) étant montées sur lesdites parties supérieures (4) du moyen de commande, et **en ce qu'**en connexion avec ladite poignée (2), il y a un bouton d'activation (27) pour activer le moteur d'entraînement (14).

4. Appareil selon l'une des revendications 1 à 3, **caractérisé en ce que** la plaque de marche (9) est munie d'un moyen de protection (12) d'un côté de ladite ouverture (10).

5. Appareil selon l'une des revendications 1 à 4, **caractérisé en ce que** le moyen pour libérer ladite carotte de terre est une plaque (22) prévue à l'intérieur de la tête de coupe (13), laquelle est reliée avec un bras pliant articulé (17) à une partie d'activation supérieure (19) reliée de manière pivotante à l'appareil (1).

6. Appareil selon l'une des revendications 1 à 5, **caractérisé en ce que** des éléments d'arrêt (25) sont prévus sur les parties inférieures (5) dudit moyen de commande (3), par exemple des goupilles fendues, des douilles et/ou des manchons de tuyaux.

7. Appareil selon l'une des revendications 1 à 6, **caractérisé en ce que** ladite plaque de marche (9) est munie d'un certain nombre de roues ou de rouleaux.

8. Procédé pour forer des trous à l'aide d'un appareil (1) selon l'une quelconque des revendications 1 à 7, **caractérisé en ce que** le forage d'un trou est effectué à l'aide des étapes suivantes :
- la plaque de marche (9) avec les parties inférieures angulairement ajustables (5) du moyen de commande sont placées dans la position dans laquelle le trou doit être foré ;
- les parties supérieures (4) du moyen de commande (3) de l'appareil (1) sont reliées aux parties inférieures (5) du moyen de commande, et l'appareil (1) est ajusté de manière à ce que la tête de coupe (13) soit disposée verticalement, lorsque l'opérateur pose un ou deux pieds sur la plaque de marche (9) ;
- le moteur d'entraînement (14) est activé, et le mouvement de creusage de va et vient de la tête de coupe (13) commence ;
- à l'aide de la poignée (2), l'opérateur enfonce la tête de coupe (13) dans la terre jusqu'à atteindre une profondeur souhaitée, et le moteur d'entraînement (14) s'arrête ;
- les parties supérieures (4) du moyen de commande (3) sont libérées en soulevant des parties inférieures (5) de manière à ce que la tête de coupe (13) contenant la carotte de terre prélevée soit soulevée au-dessus de la terre.

9. Procédé selon la revendication 8, **caractérisé par** les étapes supplémentaires suivantes :
- les parties supérieures (4) du moyen de commande (3) sont disposées en opposition au trou existant de manière à ce qu'au moins la partie inférieure de la tête de coupe (13) soit descendue à l'intérieur du trou existant ;
- à l'aide du bras pliant articulé (17), ladite plaque (22) disposée à l'intérieur de la tête de coupe (13) est activée pour descendre la carotte de terre à l'intérieur du trou existant,
- les parties supérieures (5) du moyen de commande (3) sont enlevées et la surface de la carotte de terre est ajustée avec précision au green environnant.

10. Procédé selon les revendications 8 et 9, **caractérisé en ce que**, pour libérer la carotte de terre de la tête de coupe (13), on utilise un dispositif spécial d'aération et/ou d'éjection pouvant être formé par un outil manuel externe.
